# EUROPEAN PATENT SPECIFICATION

(11) **EP 4 459 001 B1**
(45) Date of publication and mention of the grant of the patent: **22.04.2026**
(21) Application number: 23878751.9
(22) Date of filing: 26.07.2023
(51) Int. Cl.: B32B 15/01, C21D 1/22, C21D 1/84, C21D 8/02, C21D 9/46, C22C 38/00, C22C 38/04, C22C 38/06, C25D 5/50, C25D 7/06

(54) **TIN-PLATED PLATE AND MANUFACTURING METHOD THEREFORE**
VERZINNTE PLATTE UND HERSTELLUNGSVERFAHREN DAFÜR
PLAQUE ÉTAINÉE ET SON PROCÉDÉ DE FABRICATION

(30) Priority: 17.10.2022 CN 202211264096
(43) Date of publication of application: 06.11.2024
(73) Proprietor: Institute of Research of Iron and Steel, Jiangsu Province/Sha-Steel, Co. Ltd (CN), Suzhou, Jiangsu 215625 (CN); Zhangjiagang Yangtze River Cold Rolled Plate Co. Ltd, Suzhou, Jiangsu 215625 (CN); Jiangsu Shagang Group Co., Ltd., Suzhou, Jiangsu 215625 (CN)
(72) Inventor: SONG, Yifeng, Suzhou, Jiangsu 215625 (CN); LAN, Haotian, Suzhou, Jiangsu 215625 (CN); XU, Xiaohan, Suzhou, Jiangsu 215625 (CN); YUE, Chongxiang, Suzhou, Jiangsu 215625 (CN)
(74) Representative: Potter Clarkson
(86) International application number: PCT/CN2023/109410
(87) International publication number: WO 2024/082755

(56) References cited:
- CN-A- 101 906 570
- CN-A- 101 999 009
- CN-A- 108 796 381
- CN-A- 108 796 381
- CN-A- 110 629 125
- CN-A- 115 341 155
- ES-A6- 2 008 353
- JP-A- H0 641 681
- JP-A- H1 030 152
- KR-B1- 101 715 507
- US-A1- 2017 306 436

## Description

### CROSS-REFERENCE TO RELATED APPLICATIONS

The present application claims priority to Chinese Patent Application No. 202211264096.3, filed to the China Patent Office on October 17, 2022 and entitled "TIN-PLATED PLATE AND MANUFACTURING METHOD THEREFOR".

### TECHNICAL FIELD

The present application belongs to the technical field of alloy materials, in particular to a tin-plated plate and a manufacturing method therefor.

### BACKGROUND

An aerosol can is a metal packaging container for containing various reagent products such as air fresheners and pesticides and composed of a top cover, a can body and a bottom cover. The top cover is the most complicated in deformation and usually formed by a tin-plated plate having a thickness ranging from 0.30 mm to 0.45 mm through multi-pass stamping deformation machining, a requirement for a stamping formability of the tin-plated plate is high, and a problem of wrinkling is prone to occurring during stamping when a strength (or hardness) of the tin-plated plate is too high. Meanwhile, the top cover, after being connected with the can body and the bottom cover, needs to tolerate a pressure of a reagent filled in the can, the tin-plated plate needs to have a certain strength (or hardness), especially, a requirement for pressure resistance of a high-pressure aerosol can is higher, and correspondingly, a strength needed for the tin-plated plate is higher. Besides, as the top cover is an outer part and thus coated on a surface with clear lacquer so as to keep metal luster, glossiness of an appearance color of the cover also needs to be kept consistent, but the tin-plated plate is stretched and deformed during a machining process of the top cover, and then a problem of surface darkening is prone to occurring. Therefore, a tin-plated plate needs to be developed, which meets the requirement for stamping formability, pressure resistance and surface glossiness of the top cover of the aerosol can at the same time.

To meet the requirement for the stamping formability and the pressure resistance of the top cover of the aerosol can, the existing tin-plated plate for the top cover of the aerosol can is designed by adopting two main types of components, including: (1) low-carbon aluminum killed steel is adopted, a batch annealing process is adopted, annealing time is long, carbon and nitrogen atoms are fully precipitated, aging resistance is good, and thus good stamping formability is obtained; (2) interstitial-free steel (IF steel) is adopted to form an interstitial-free ferritic structure, the aging resistance is good, alloy elements such as Mn, Ti and B are added, and a hardness of a steel plate is improved by solid solution strengthening and precipitation strengthening to meet the requirement for the pressure resistance. To meet the requirement for the surface glossiness of the top cover of the aerosol can, surface brightness of the cover after stamping is maintained by increasing a tinning amount in the prior art.

For example, the prior art discloses an aging-resistant tin-plated plate, which adopts a component design of the low-carbon aluminum killed steel: C 0.02-0.06% and Al 0.005-0.040% , a batching annealing process is adopted for production, and the requirement for machining formability of the top cover can be met; but a product hardness is in a range of 55±4, the hardness is low, which may be merely used for a common low pressure can and cannot meet the requirement for the high pressure resistance of a top cover of a medium-pressure can and a high-pressure can, and as a temperature in a batching annealing steel coil is non-uniform, hardness fluctuation of a head, middle and a tail of the steel coil is large, and it is not good for production of a high-speed cover manufacturing line.

The prior art further discloses a tin-plated plate for a top cover of an aerosol can and a production method therefor, a component design of the interstitial-free steel (IF steel) is adopted: C 0.0015-0.0030%, Mn 0.50-0.60%, Ti 0.045-0.065%, and B 0.0002-0.0006%, though the aging resistance is good, a stamping cracking ratio is low, a content of C needs to be controlled at a range from 15 ppm to 30 ppm, steel smelting production difficulty is high, more alloy elements such as Mn, Ti and B are further added, and smelting cost is high; and meanwhile, high hot rolling and annealing process temperatures are adopted, energy consumption during the process is large, an oxide-scale is prone to being thickened and is not easy to remove during the hot rolling process, and consequently, a problem of surface quality during a subsequent process is caused, and production control difficulty is high.

CN108796381A discloses a steel plate with axial bearing capacity and excellent formability used for cans and a manufacturing method thereof. The steel plate comprises the following components, by weight: 0.020% to 0.080% of C, no more than 0.030% of Si, 0.20% to 1.00% of Mn, no more than 0.020% of P, 0.0020% to 0.0080% of N, and Al, with the balance being Fe and unavoidable impurities, wherein 10<=Al/N<=20. High yield strength and a rising value of the yield strength after baking can be obtained by controlling hot rolling, cold rolling, continuous annealing temperature and other processes.

ES2008353A6 discloses a continuously annealed steel sheet having excellent stretching flange formability, suitable for production of DI cans, containing C: 0.0040 to 0.0600%; Mn: 0.05 to 0.60%; P: not more than 0.020%; Acid soluable Al: 0.005 to 0.100%; N: not more than 0.0070%; Balance: iron and unavoidable impuiities and having a tensile strength not higher than 42 kgf/mm² and a grain size number ranging from 8.5 to 11.5 according to JIS standard.

JPH0641681A discloses a steel sheet for DWI can capable of meeting the recent demand for reducing thickness by providing superior flange workability, DWI workability equal to or higher than that of the conventional batch annealed steel sheet, and high pressure-resisting strength. This steel sheet has a composition which contains 0.010 to 0.060% C, 0.05 to 0.50% Mn, 0.015% or less P, 0.015% or less S, 0.020 to 0.100% acid soluble Al, and 0.0003 to 0.0070% N and where the content of solid solution C and the content of (solid solution C and solid solution N) are regulated to 0.0005% or higher and 0.0010 to 0.0020%, respectively. Further, this steel sheet has 46 to 60 hardness, (20 to 42) kgf/mm² yield strength, 9.0-11.5 crystalline grain No., and 1.8 or lower degree of elongation.

### SUMMARY OF THE INVENTION

Therefore, a technical problem to be solved by the present application is to overcome the above defects existing in a tin-plated plate in the prior art, so as to provide a tin-plated plate and a manufacturing method therefor.

Thus, the present application provides the following technical solution.

The present application provides a method for manufacturing a tin-plated plate according to the invention, which is defined in claim 1. Preferred embodiments are defined in dependent claims. The tin-plated plate according to the invention is defined in claim 9.

A description of effects and selection of main components designed by the present application:
C: C is the most economical strengthening element in steel, and maintaining a certain content of C during the steel smelting process is beneficial for obtaining a material strength and hardness at low cost; with increase of the C content, the material hardness is increased, too high hardness and low elongation of the tin-plated plate are prone to being caused by too high C content, the stamping formability and aging resistance of the tin-plated plate are reduced, meanwhile, a control range of the C content affects fluctuation of the material hardness, however, too narrow control range will greatly increase the steel smelting cost. Thus, the present application selects the C content in a range of 0.02% to 0.04%.

Mn: Mn, as a solid solution strengthening element, can improve a strength of the steel plate and is not obvious in ductility decrease, meanwhile, Mn and S are combined to form MnS so as to reduce hot shortness of the steel, however, too high Mn content will increase alloy cost. Thus, the present application selects the Mn content in a range of 0.15% to 0.25%.

Si: Si is prone to enriched oxidation on a surface of the steel, which is not beneficial for surface quality and plating performance of the steel plate, so the lower the Si content, the better, and the present application selects Si≤0.03%.

P: P is high in solid solution strengthening effect but prone to segregation to form a banded structure, which reduces ductility and toughness of the steel plate and is not beneficial for formability, and the present application selects P≤0.015%.

S: for the tin-plated plate, S belongs to harmful impurity elements, which is prone to forming sulfide inclusions and not beneficial for the formability of the steel plate, and the present application selects S≤0.010%.

N: for the tin-plated plate, N belongs to harmful impurity elements, wherein interstitial solid solution N atom increases the strength and hardness of the steel plate, reduces ductility, and meanwhile, makes the steel plate prone to having a stretcher strain mark during stamping deformation, so the N content in the steel needs to be reduced, and the present application selects N≤0.0030%.

Al: Al, as a deoxidizing agent, is added during the steel smelting process, meanwhile, Al and N may be combined to form AlN, as N in the steel cannot be removed completely, adding a certain amount of Al may fix N in the steel, which improves the aging resistance, keeping a certain extra proportion of Al playing a role in nitrogen fixation is beneficial for fully fixing N in low-carbon steel, namely, (Al-0.02%)/27≥6×(N/14), but too high Al content is prone to causing increase of inclusions in steel smelting, making castability of continuous casting poor and increase of the alloy cost. Thus, the present application selects the Al content in a range of 0.03% to 0.06%, which meets a relational expression Al≥0.02%+11.57N.

The method for manufacturing the tin-plated plate in the present application takes into account the stamping formability, pressure resistance and production economy of the tin-plated plate needed by the top cover of the aerosol can. In the manufacturing method of the present application, a description of important steps during each process is:
steel smelting: RH vacuum degassing treatment is adopted, the C content may be accurately controlled at a range from 0.02% to 0.04%, the hardness of the needed tin-plated plate is obtained by fully utilizing the solid solution strengthening effect of C, the RH process may also effectively remove N, the N content in the steel is reduced, which is beneficial for the stamping formability, and meanwhile, the Al content needed for fixing N is reduced;
hot rolling: an austenite rolling process is adopted, meanwhile, relatively low heating temperature and rolling temperature of the plate blank and an appropriate thickness of an intermediate billet are controlled, and problems of high energy consumption, poor surface quality and coarse grains caused by high-temperature rolling production are avoided. If the heating temperature of the plate blank is too high, a large amount of AlN is dissolved during the heating process, resulting in increase of a content of solid solution nitrogen, AlN can be fully precipitated by a higher aluminum content and long-time high-temperature coiling, however, too low temperature makes rolling difficult and is prone to causing low finish rolling temperature, and thus, the heating temperature of the plate blank is controlled at a range from 1180°C to 1220°C; too small thickness of the intermediate billet causes large temperature drop during the rolling process, fails to meet the requirement for the finish rolling temperature and makes temperature uniformity of the steel coil poor, and too large thickness of the intermediate billet leads to high rolling difficulty, so the thickness of the intermediate billet is selected in a range from 40 mm to 42 mm; under the condition of ensuring that the temperature is higher than an Ar3 phase transformation point, a lower finish rolling temperature is adopted, two-phase region rolling is avoided, and the finish rolling temperature is selected in a range from 860°C to 890°C; and when the coiling temperature is too high, coarse grains are prone to being formed, the strength is reduced, too low temperature is not beneficial for precipitation of the solid solution N, and thus the coiling temperature is selected in a range from 640°C to 670°C.

Cold rolling: if a reduction rate of the cold rolling is too large, a recrystallization temperature is increased, a higher annealing temperature is needed, and meanwhile, after annealing, a grain size of the steel plate is reduced, the hardness is increased, and a yield plateau is extended, which is not beneficial for uniform deformation during stamping; and if the reduction rate of the cold rolling is too small, coarse grains of the steel plate are caused, the hardness is low, a thinner raw material of hot rolling is further needed, the production cost is increased, and thus the reduction rate of the cold rolling is selected in a range from 85% to 88%.

Continuous annealing: continuous annealing is a key link for controlling structure performance of the steel plate, and the steel plate is heated to above a recrystallization temperature and is subjected to a process of recovery, recrystallization, grain growth and cementite precipitation. First, a ferrite structure with a certain grain size is obtained by matching a speed of the strip steel and a temperature of the soaking zone; meanwhile, solid solution C atoms in ferrite are oversaturated by adopting rapid cooling (100°C/s to 130°C/s) to obtain sufficient precipitation stored energy; first-zone aging adopts an over-aging process, the strip steel, after being subjected to rapid cooling, is reheated to reach an aging temperature (400°C to 420°C), heat preservation is performed for a period of time, and it helps a large amount of the cementite to be rapidly precipitated; and second-zone aging is inclined aging, the temperature of the strip steel is fully utilized (320°C to 420°C) and maintained for long heat-preservation time so as to further precipitate cementite, and unfavorable influence of an interstitial solid solution C atom on stamping formability is reduced. Thus, in combination with the components of the steel plate and hot rolling and cold rolling processes in the present application, the reasonable annealing process is used, namely: a speed of the strip steel is in a range from 400 m/min to 450 m/min, the temperature of the soaking zone is in a range from 740°C to 760°C, the temperature of the rapid cooling zone is in a range from 360°C to 380°C, a cooling rate is in a range from 100°C/s to 130°C/s, a temperature of the strip steel in a first section of the aging zone is in a range from 400°C to 420°C, in which aging time is in a range from 60s to 80s, and a temperature of the strip steel in a second region of the aging zone is in a range from 320°C to 420°C, in which aging time is in a range from 120s to 140s.

Temper rolling: effects of the temper rolling include adjusting a mechanical property of the steel plate after annealing, giving different surface structures and roughness to the strip steel and improving plate shape quality. Adopting a large rolling force and a small tension mode is beneficial for obtaining more movable dislocations and reducing the yield elongation, however, too large rolling force and too small tension are not beneficial for strip steel shape and surface structure control, and thus rolling forces of two temper mill stands are selected as 4000 kN to 4500 kN and 3000 kN to 3500 kN respectively, and a tension of the strip steel is in a range from 40 kN to 60 kN. As for the low-carbon aluminum killed steel, with increase of a temper rolling elongation, the yield strength of the steel plate is reduced and then increased, the temper rolling elongation reaches 1.2% or above, the yield plateau of the annealed steel plate with a thickness ranging from 0.30 mm to 0.45 mm may be eliminated, the yield strength reaches the minimum point, the temper rolling elongation continues to be increased to 1.4% or above, more removable dislocations may be obtained, the yield strength and hardness of the steel plate are increased properly, but too high temper rolling elongation increases hardness and reduces ductility remarkably, in this case, a load of the temper mill is increased, and thus the temper rolling elongation does not exceed 1.6%.

Softening-melting: the tin-plated plate is rapidly heated to a temperature higher than a tin melting point (232°C) through a softening-melting device, a tin layer is molten to obtain a smooth surface, meanwhile, a tin iron alloy layer is formed, and adhesion and corrosion resistance of the tin layer are improved. If a softening-melting temperature is too low, softening-melting of the tin layer is incomplete; and if the softening-melting temperature is too high, the alloy layer is thickened and oxidation of the tin layer is considerable, so the softening-melting temperature is selected in a range from 260°C to 263°C, meanwhile, the height from the softening-melting device to the water quenching tank is adjusted to a range from 4.2 m to 4.6 m, time of a softening-melting reaction is controlled, so as to reduce a thickness of the tin iron alloy layer, and under the condition of keeping the tinning amount unchanged, brighter pure tin layers are maintained, so as to improve surface brightness of the tin-plated plate after stamping and cover making and avoid the problem of darkening.

The technical solutions of the present application have the following advantages.

According to the method for manufacturing the tin-plated plate provided by the present application, the component design of the low-carbon aluminum killed steel is adopted, under the condition of not changing the alloy content and the production control difficulty, by designing contents of elements such as C, Mn, Al and N in the tin-plated plate, the corresponding hot rolling, cold rolling, annealing and temper rolling processes are used, the strengthening effect of the conventional elements such as carbon and manganese is fully utilized, in combination with aluminum nitride precipitation control in hot rolling and annealing, the appropriate cold rolling reduction rate is selected, the grain size of the ferrite in the steel and cementite precipitation are controlled through continuous annealing and over-aging treatment, the specific temper rolling process is used, the tin-plated plate with small fluctuation of strength and hardness, high elongation and short yield plateau is produced, the requirement for the stamping formability and pressure resistance of the top cover of the aerosol can is met, components of the tin-plated plate are simple, the processes are simple and convenient to implement, and the production cost is low. Specifically, the present application adopts steel smelting components and a combination design of the hot rolling, annealing and temper rolling processes, aluminum nitride and cementite precipitation is controlled, interstitial solid solution C and N atoms in the steel are reduced to the maximum degree, the yield plateau is effectively shortened, and the stamping formability is facilitated. In the present application, the relatively low rolling temperature and the appropriate thickness of the intermediate billet are controlled in the hot rolling, the problems of high energy consumption, poor surface quality and coarse grains caused by high-temperature rolling production are avoided, the product surface quality and the structure uniformity are improved, and the production cost is further reduced.

According to the method for manufacturing the tin-plated plate in the present application, the induction softening-melting is used, the softening-melting temperature and the reaction time are controlled, meanwhile, the alloy tin amount is controlled reasonably, the effect of accurately controlling the alloy tin layer is achieved, the alloy tin amount of the tin-plated plate is in a range from 0.4 g/m² to 0.6 g/m², and it is beneficial for maintaining the surface brightness after stamping deformation of the tin-plated plate.

The tin-plated plate provided by the present application has the hardness (HR30T) of 58±2, the yield strength ranging from 300 MPa to 350 MPa, the tensile strength ranging from 360 MPa to 400 MPa, the elongation at break ranging from 33% to 38%, and the yield elongation in a range of ≤3%, wherein the hardness and the strength of the steel plate can meet the requirement for the pressure resistance of the top cover of the aerosol can, meanwhile, the fluctuation ranges of the hardness and the strength are small, the elongation is high, the yield plateau is short, stamping the top cover of the aerosol can without wrinkles may be achieved, meanwhile, the microstructure of the steel plate is equiaxed ferrite and cementite particles, the cementite is uniformly dispersed and distributed without strip cementite, cracking caused by inconsistent local deformation is avoided, and uniformity of machining and deformation is improved. By controlling the mechanical properties such as the hardness, the strength, the elongation and the yield elongation, and the microstructure of the tin-plated plate, the problem that both the stamping formability and the pressure resistance of conventional low-carbon aluminum killed steel are difficult to consider is effectively solved, and the use demand of the top cover of the aerosol can is met.

### BRIEF DESCRIPTION OF THE DRAWINGS

In order to more clearly describe specific implementations of the present application or technical solutions in the prior art, the accompanying drawings needed by the description in the specific implementations or in the prior art will be briefly introduced below. Apparently, the accompanying drawings in the following description are some implementations of the present application. Those ordinarily skilled in the art may also obtain other accompanying drawings according to these accompanying drawings without making creative work.
FIG. 1 is a picture of a microstructure of a tin-plated plate obtained in Example 1 of the present application.
FIG. 2 is a picture of a microstructure of a tin-plated plate obtained in Comparative Example 1 of the present application.
FIG. 3 is a curve of an annealing process in an Example of the present application.

### DETAILED DESCRIPTION

The following embodiments are provided for better further understanding the present application, which are not limited to the preferable implementations and do not constitute a limitation on the content and the protection scope of the present application, and any product the same as or similar to the present application obtained by anybody under the inspiration of the present application or by combining the present application with features in the other prior art falls within the protection scope of the present application.

Where specific experiment steps or conditions are not indicated in the embodiments can be performed according to operations of conventional experiment steps or conditions described by documents in the art. Whatever reagent or instrument used with no indicated manufacturer may be a conventional reagent product obtained through market purchase.

A method for manufacturing a tin-plated plate provided by the embodiments and the comparative embodiments in the present application includes: steel smelting and continuous casting, hot rolling, acid pickling, cold rolling, continuous annealing, temper rolling, and tinplating. The specific steps are:
1) Steel smelting and continuous casting: subjecting molten steel to converter smelting and RH refining to be continuously cast into a plate blank. See Table 1 for chemical components of the plate blank.

**Table 1**

| Number | C | Mn | Si | P | S | Al | N | Whether meet Al≥0.02%+11.57N |
|---|---|---|---|---|---|---|---|---|
| Example 1 | 0.031 | 0.23 | 0.01 | 0.012 | 0.006 | 0.04 | 0.0015 | Yes |
| Example 2 | 0.035 | 0.15 | 0.01 | 0.012 | 0.009 | 0.05 | 0.0022 | Yes |
| Example 3 | 0.020 | 0.25 | 0.02 | 0.015 | 0.005 | 0.06 | 0.0030 | Yes |
| Example 4 | 0.040 | 0.18 | 0.01 | 0.010 | 0.010 | 0.05 | 0.0025 | Yes |
| Example 5 | 0.028 | 0.20 | 0.01 | 0.009 | 0.005 | 0.03 | 0.0009 | Yes |
| Comparative Example 1 | 0.055 | 0.21 | 0.01 | 0.012 | 0.008 | 0.04 | 0.0051 | No |
| Comparative Example 2 | 0.005 | 0.15 | 0.01 | 0.012 | 0.007 | 0.04 | 0.0012 | Yes |
| Comparative Example 3 | 0.035 | 0.21 | 0.01 | 0.011 | 0.006 | 0.02 | 0.0028 | No |

2) Hot rolling: subjecting the continuously cast plate blank to heating, rough rolling, finish rolling, laminar cooling and coiling in sequence to obtain a hot-rolled steel coil with a thickness ranging from 2.5 mm to 3.0 mm. See Table 2 for specific parameters of the hot rolling process.

**Table 2**

| Number | Thickness of hot-rolled steel coil (mm) | Heating temperature of plate blank (°C) | Thickness of intermediate billet (mm) | Finish rolling temperature (°C) | Coiling temperature (°C) |
|---|---|---|---|---|---|
| Example 1 | 2.5 | 1218 | 40 | 861 | 646 |
| Example 2 | 2.5 | 1206 | 40 | 875 | 655 |
| Example 3 | 2.75 | 1205 | 40 | 872 | 662 |
| Example 4 | 2.75 | 1185 | 40 | 873 | 667 |
| Example 5 | 3.0 | 1194 | 42 | 890 | 670 |
| Comparative Example 1 | 2.5 | 1223 | 38 | 855 | 615 |
| Comparative Example 2 | 2.75 | 1235 | 40 | 902 | 698 |
| Comparative Example 3 | 3.0 | 1200 | 40 | 862 | 656 |

3) Acid pickling and cold rolling: subjecting the hot-rolled steel coil to uncoiling, acid pickling, trimming, continuous cold rolling and coiling in sequence to obtain a chilled coil with a thickness ranging from 0.30 mm to 0.45 mm. See Table 3 for specific parameters of the hot rolling process.

**Table 3**

| Number | Thickness of chilled coil (mm) | Cold rolling reduction rate (%) |
|---|---|---|
| Example 1 | 0.30 | 88% |
| Example 2 | 0.32 | 87% |
| Example 3 | 0.38 | 86% |
| Example 4 | 0.38 | 86% |
| Example 5 | 0.45 | 85% |
| Comparative Example 1 | 0.30 | 88% |
| Comparative Example 2 | 0.38 | 86% |
| Comparative Example 3 | 0.45 | 85% |

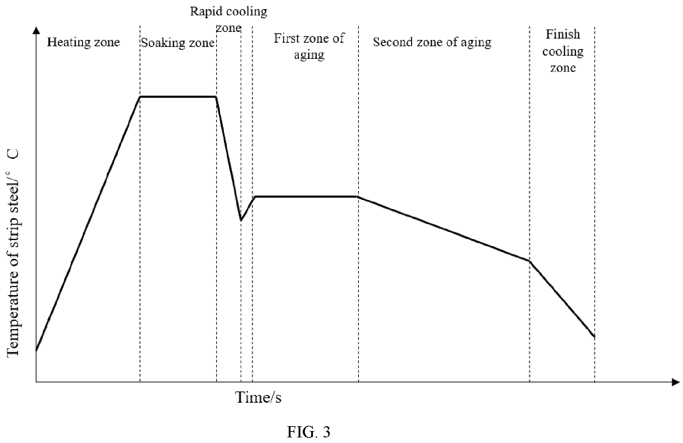

4) Continuous annealing and temper rolling: subjecting the chilled coil to uncoiling, degreasing cleaning, annealing, temper rolling, trimming and coiling in sequence to obtain an annealed steel coil. A curve of the annealing process of the Example in the present application is shown in FIG. 3. See Table 4 and Table 5 for specific process parameters.

**Table 4**

| Number | Temperature of strip steel (m/min) | Soaking zone Temperature of strip steel (°C) | Rapid cooling zone Temperature of strip steel (°C) | Cooling rate (°C/s) | First section of aging zone Temperature of strip steel (°C) | Aging time (s) | Second section of aging zone Temperature of strip steel (°C) | Aging time (s) | Finish cooling zone Temperature of strip steel (°C) |
|---|---|---|---|---|---|---|---|---|---|
| Example 1 | 450 | 760 | 378 | 130 | 415 | 65 | 320-415 | 124 | 105 |
| Example 2 | 450 | 755 | 380 | 128 | 412 | 65 | 338-412 | 124 | 102 |
| Example 3 | 420 | 740 | 365 | 119 | 403 | 70 | 326-403 | 133 | 116 |
| Example 4 | 400 | 746 | 372 | 113 | 410 | 73 | 345-410 | 140 | 120 |
| Example 5 | 400 | 740 | 380 | 109 | 418 | 73 | 352-418 | 140 | 119 |
| Comparative Example 1 | 450 | 720 | 405 | 117 | 372 | 65 | 305-372 | 124 | 110 |
| Comparative Example 2 | 420 | 780 | 408 | 129 | 370 | 70 | 305-370 | 133 | 115 |
| Comparative Example 3 | 400 | 750 | 410 | 112 | 376 | 73 | 310-376 | 140 | 119 |

**Table 5**

| Number | Temper rolling force of first stand temper mill (kN) | Temper rolling force of second stand temper mill (kN) | Tension of strip steel (kN) | Temper rolling elongation (%) |
|---|---|---|---|---|
| Example 1 | 4300 | 3200 | 55 | 1.5 |
| Example 2 | 4300 | 3500 | 40 | 1.4 |
| Example 3 | 4000 | 3400 | 60 | 1.5 |
| Example 4 | 4200 | 3200 | 50 | 1.5 |
| Example 5 | 4500 | 3000 | 55 | 1.6 |
| Comparative Example 1 | 3500 | 3500 | 45 | 1.1 |
| Comparative Example 2 | 3500 | 3000 | 40 | 1.6 |
| Comparative Example 3 | 3800 | 3200 | 50 | 1.3 |

5) Tinplating: subjecting the annealed steel coil to uncoiling, degreasing cleaning, acid pickling, electroplating, softening-melting, passivation, oiling and coiling to obtain an tinplated steel coil (tin-plated plate). See Table 6 for specific process parameters.

**Table 6**

| Number | Speed of strip steel (m/min) | Softening-melting temperature (°C) | Softening-melting height (m) | Single-side tinning amount (g/m²) |
|---|---|---|---|---|
| Example 1 | 380 | 260 | 4.6 | |
| Example 2 | 380 | 260 | 4.6 | |
| Example 3 | 350 | 262 | 4.2 | |
| Example 4 | 350 | 262 | 4.3 | |
| Example 5 | 320 | 263 | 4.2 | 2.8 |
| Comparative Example 1 | 380 | 265 | 4.7 | |
| Comparative Example 2 | 350 | 270 | 4.5 | |
| Comparative Example 3 | 320 | 263 | 4.8 | |

### Comparative Example 4

This comparative example has a difference from Example 1 that chemical compositions of the plate blank are different, and other process operation steps and parameters are the same as those of Example 1. Specific composition of the plate blank is shown in the following table.

**Table 7**

| Number | C | Mn | Si | P | S | Al | N | Whether meet Al≥0.02%+11.57N |
|---|---|---|---|---|---|---|---|---|
| Comparative Example 4 | 0.046 | 0.21 | 0.01 | 0.011 | 0.008 | 0.02 | 0.0035 | No |

### Comparative Example 5

This comparative example merely has a difference from Example 1 that operation parameters of continuous annealing are different, which are shown in detail in the following table.

**Table 8**

| Number | Speed of strip steel (m/mi n) | Soaking zone Temperatu re of strip steel (°C) | Rapid cooling zone | Coolin g rate (°C/s) | First section of aging zone | Agin g time (s) | Second section of aging zone | Agin g time (s) | Finish cooling zone |
|---|---|---|---|---|---|---|---|---|---|
| | | | Temperatu re of strip steel (°C) | | Temperatu re of strip steel (°C) | | Temperatu re of strip steel (°C) | | Temperatu re of strip steel (°C) |
| Comparati ve Example 5 | 450 | 760 | 378 | 130 | 378 | 65 | 310-378 | 124 | 110 |

### Comparative Example 6

This comparative example merely has a difference from Example 1 that operation parameters of continuous hot rolling are different, which are shown in detail in the following table.

**Table 9**

| Number | Thickness of hot-rolled steel coil (mm) | Heating temperature of plate blank (°C) | Thickness of intermediate billet (mm) | Finish rolling temperature (°C) | Coiling temperature (°C) |
|---|---|---|---|---|---|
| Comparative Example 6 | 2.5 | 1190 | 38 | 852 | 605 |

### Comparative Example 7

This comparative example merely has a difference from Example 1 that operation parameters of temper rolling are different, which are shown in detail in the following table.

**Table 10**

| Number | Temper rolling force of first stand temper mill (kN) | Temper rolling force of second stand temper mill (kN) | Tension of strip steel (kN) | Temper rolling elongation (%) |
|---|---|---|---|---|
| Comparative Example 7 | 3500 | 3500 | 45 | 1.1 |

Test of mechanical properties, structure and tinning amount is performed on the tinplated steel coil obtained according to the above examples and comparative examples, a specific test method refers to GB/T 2520-2017 *Cold-rolled Tinplated Steel Plate and Steel Strip* and GB/T 4335-2013 *Test Method for Low-carbon Steel Cold-rolled Sheet Ferrite Grain Size.* Test performing results are shown in Table 11.

**Table 11**

| Number | Hardnes s (HR30T ) | Yield strengt h (MPa) | Tensile strengt h (MPa) | Elongatio n at break (%) | Yield elongatio n (%) | Grain size (Level ) | Single -side tinning amoun t (g/m²) | Amoun t of alloy tin (g/m²) |
|---|---|---|---|---|---|---|---|---|
| Example 1 | 59.1 | 331 | 384 | 34.5 | 2.8 | 11 | 2.85 | 0.52 |
| Example 2 | 58.2 | 316 | 373 | 36.5 | 2.1 | 10.5 | 2.81 | 0.54 |
| Example 3 | 58.8 | 315 | 376 | 35 | 2.0 | 10.5 | 2.78 | 0.47 |
| Example 4 | 57.9 | 320 | 382 | 35.5 | 2.2 | 11 | 2.88 | 0.51 |
| Example 5 | 57.6 | 307 | 362 | 37.5 | 1.5 | 10 | 2.85 | 0.55 |
| Comparativ e Example 1 | 60.5 | 365 | 414 | 28.5 | 7.2 | 11.5 | 2.80 | 0.72 |
| Comparativ e Example 2 | 56.4 | 229 | 346 | 39 | 0 | 9 | 2.82 | 0.85 |
| Comparativ e Example 3 | 59.1 | 341 | 391 | 31.1 | 5.3 | 11 | 2.77 | 0.65 |
| Comparativ e Example 4 | 60.1 | 344 | 408 | 29.8 | 6.5 | 11.5 | 2.85 | 0.52 |
| Comparativ e Example 5 | 60.3 | 348 | 391 | 31.5 | 5.5 | 11.5 | 2.85 | 0.52 |
| Comparativ e Example 6 | 61.2 | 378 | 405 | .27.0 | 8.0 | 11.5 | 2.85 | 0.52 |
| Comparativ e Example 7 | 58.8 | 326 | 381 | 35.0 | 4.4 | 11 | 2.85 | 0.52 |

The tinplated steel coil provided by the examples and the comparative examples in the present application is applied to a production line of a top cover of an aerosol can. The cover formability, pressure resistance test and cover appearance test results are shown in Table 12. A test method for a pressure resistance value is performed with reference to GB/T 13042-2008 *Packaging Container Iron Aerosol Tank.*

According to the embodiment in the present application, the cover formability is good, there are no cracking and wrinkles, the pressure resistance value reaches 1.8 MPa or above, the requirement of a high-pressure aerosol product may be met, and meanwhile, the appearance of the cover is bright. Pressure resistance values of Comparative Example 1 and Comparative Example 3 are qualified, but there is a problem of cracking and wrinkles in cover forming, Comparative Example 2 is good in formability but insufficient in pressure resistance and thus cannot be used for the high-pressure aerosol can, and meanwhile, Comparative Examples 1 to 3 also have a problem of surface darkening after cover making. Comparative Examples 4 to 7 are qualified in pressure resistance values but have the problem of cracking or wrinkles in cover forming.

**Table 12**

| Number | Cover formability | Pressure resistance value (MPa) | Appearance |
|---|---|---|---|
| Example 1 | No cracking and no wrinkles | 1.87 | Bright surface |
| Example 2 | No cracking and no wrinkles | 1.92 | Bright surface |
| Example 3 | No cracking and no wrinkles | 2.05 | Bright surface |
| Example 4 | No cracking and no wrinkles | 2.11 | Bright surface |
| Example 5 | No cracking and no wrinkles | 2.01 | Bright surface |
| Comparative Example 1 | Cracking and obvious wrinkles occur | 1.95 | Dark surface |
| Comparative Example 2 | No cracking and no wrinkles | 1.71 | Dark surface |
| Comparative Example 3 | No racking but obvious wrinkles occur | 2.16 | Dark surface |
| Comparative Example 4 | Cracking and obvious wrinkles occur | 1.92 | Bright surface |
| Comparative Example 5 | No racking but obvious wrinkles occur | 1.95 | Bright surface |
| Comparative Example 6 | Cracking and obvious wrinkles occur | 2.01 | Bright surface |
| Comparative Example 7 | No cracking but having wrinkles | 1.83 | Bright surface |
| Product requirement of a top cover of an aerosol can | No cracking and no wrinkles | ≥1.8 | Bright surface |

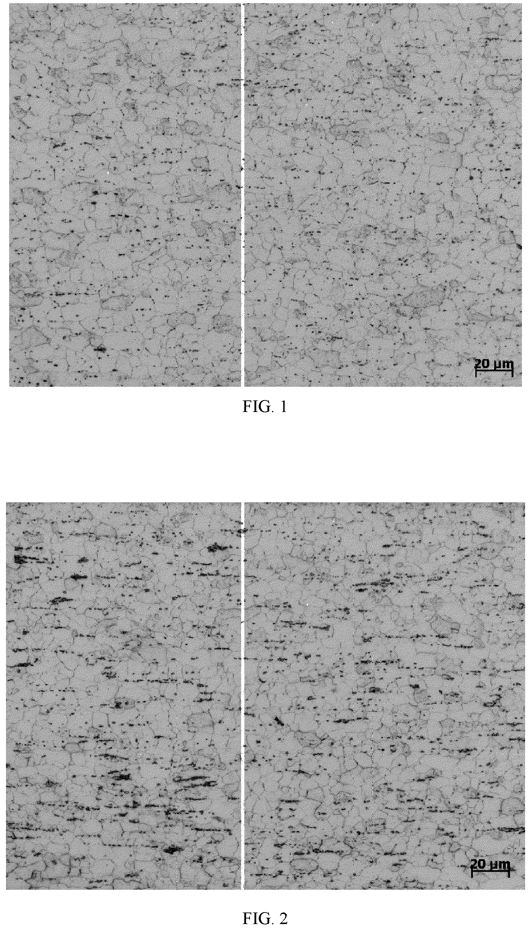

FIG. 1 is a picture of a microstructure of a tin-plated plate provided by Example 1 in the present application. It may be seen from the figure that the microstructure is equiaxed ferrite and cementite particles, ferrite grains are equiaxed and uniform in size and are level 11 in grain size, cementite is uniformly dispersed and distributed and small in amount, and the whole structure is uniform. FIG. 2 is a picture of a microstructure of a tin-plated plate provided by Comparative Example 1 in the present application. It may be seen from the figure that the microstructure is equiaxed ferrite and cementite particles, ferrite grains are small and are level 11.5 in grain size, cementite is large in size and large in amount, is in a strip shape or cluster shape and is non-uniform in distribution, the whole structure is non-uniform, non-uniform deformation is prone to occurring, and wrinkles or cracking of cover making are/is caused.

Apparently, the above embodiments are merely for clearly describing the examples but not for limiting the implementations. Those ordinarily skilled in the art can also make modifications or variations in other different forms based on the above description.

## Claims

1. A method for manufacturing a tin-plated plate, comprising the following steps: steel smelting and continuous casting, hot rolling, acid pickling and cold rolling, continuous annealing and temper rolling, and tinplating;
wherein chemical components of a plate blank during a steel smelting and continuous casting process in mass percent are controlled to be: C 0.020-0.040%, Mn 0.15-0.25%, Si ≤0.03%, P ≤0.015%, S ≤0.010%, Al 0.03~0.06%, N ≤0.0030%, and the balance Fe and other inevitable impurities, and contents of Al and N elements in mass percent meet a relational expression Al≥0.02%+11.57N;
a heating temperature of the plate blank during a hot rolling process is controlled at a range from 1180°C to 1220°C, an intermediate billet has thickness ranging from 40 mm to 42 mm, a finish rolling temperature is in a range from 860°C to 890°C, and a coiling temperature is in a range from 640°C to 670°C;
a speed of strip steel is controlled at a range from 400 m/min to 450 m/min during the continuous annealing and temper rolling process, strip steel of a soaking zone has a temperature ranging from 740°C to 760°C; strip steel of a rapid cooling zone has a temperature ranging from 360°C to 380°C, a cooling rate is in a range from 100°C/s to 130°C/s, the strip steel after cooling enters an aging zone, the strip steel of a first section in the aging zone has temperature ranging from 400°C to 420°C, aging time is in a range from 60 s to 80 s, the strip steel of a second section in the aging zone has a temperature ranging from 320°C to 420°C, and aging time is in a range from 120 s to 140 s; and temper rolling adopts a two stand temper mill, a temper rolling force of the first stand temper mill is in a range from 4000 kN to 4500 kN, a temper rolling force of the second stand temper mill is in a range from 3000 kN to 3500 kN, the strip steel has a tension ranging from 40 kN to 60 kN, and an elongation of temper rolling is in a range from 1.4% to 1.6%;
wherein a single-side tinning amount is controlled to a range from 2.7 g/m² to 2.9 g/m² during a tinplating process, the strip steel has a speed ranging from 320 m/min to 380 m/min, a softening-melting temperature is in a range from 260°C to 263°C, and a height from a softening-melting device to a water quenching tank is in a range from 4.2 m to 4.6 m;
wherein a cold rolling reduction rate is in a range from 85% to 88%.

2. The method for manufacturing the tin-plated plate according to claim 1, wherein the steel smelting and continuous casting comprises: subjecting molten steel to converter smelting and RH refining to be continuously cast into a plate blank.

3. The method for manufacturing the tin-plated plate according to claim 1, wherein the hot rolling comprises: rough rolling, finish rolling, laminar cooling and coiling to obtain a hot-rolled steel coil.

4. The method for manufacturing the tin-plated plate according to claim 3, wherein the hot-rolled steel coil has a thickness ranging from 2.5 mm to 3.0 mm.

5. The method for manufacturing the tin-plated plate according to claim 1, wherein the acid pickling and cold rolling comprises: subjecting a hot-rolled steel coil to uncoiling, acid pickling, trimming, cold rolling and coiling to obtain a chilled coil;
the chilled coil has a thickness controlled to a range from 0.30 mm to 0.45 mm during the acid pickling and cold rolling process.

6. The method for manufacturing the tin-plated plate according to claim 1, wherein the continuous annealing and temper rolling comprises: subjecting a chilled coil to uncoiling, degreasing cleaning, continuous annealing, temper rolling, trimming and coiling to obtain an annealed steel coil.

7. The method for manufacturing the tin-plated plate according to claim 6, wherein the temper rolling is dry temper rolling.

8. The method for manufacturing the tin-plated plate according to claim 1, wherein the tinplating comprises: subjecting an annealed steel coil to uncoiling, degreasing cleaning, acid pickling, electroplating, softening-melting, passivation, oiling and coiling to obtain an tinplated steel coil; and
the softening-melting is induction softening-melting.

9. A tin-plated plate, obtainable by the method according to any one of claims 1 to 8, wherein the chemical component of the steel are C 0.020-0.040%, Mn 0.15-0.25%, Si ≤0.03%, P ≤0.015%, S ≤0.010%, Al 0.03∼0.06%, N ≤0.0030%, and the balance Fe and other inevitable impurities, and contents of Al and N elements in mass percent meet a relational expression Al≥0.02% +11.57N, the tin-plated plate has a thickness ranging from 0.30 mm to 0.45 mm, a hardness HR30T is in a range of 58±2, a yield strength is in a range from 300 MPa to 350 MPa, a tensile strength is in a range from 360 MPa to 400 MPa, an elongation at break is in a range from 33% to 38%, and a yield elongation is in a range of ≤3%, and a microstructure of the tin-plated plate is an equiaxed ferrite and cementite particles, wherein a ferrite grain size is in a range from 10 level to 11 level, and cementite is uniformly dispersed and distributed;
wherein the test methods for the above parameters are carried out in accordance with GB/T 2520-2017 *Cold-rolled Tinplated Steel Plate and Steel Strip* and GB/T 4335-2013 *Test Method for Low-carbon Steel Cold-rolled Sheet Ferrite Grain Size.*

## Patentansprüche

1. Verfahren zur Herstellung einer verzinnten Platte, umfassend die folgenden Schritte: Stahlschmelzen und Stranggießen, Warmwalzen, Säurebeizen und Kaltwalzen, kontinuierliches Glühen und Anlasswalzen sowie Verzinnen;
wobei die chemischen Komponenten eines Plattenrohlings während eines Stahlschmelz- und Stranggussverfahrens in Massenprozent gesteuert werden zum: C 0,020-0,040 %, Mn 0,15-0,25 %, Si ≤0,03 %, P ≤0,015 %, S ≤0,010 %, Al 0,03~0,06 %, N ≤0,0030 %, und der Rest Fe und andere unvermeidliche Verunreinigungen, und die Gehalte der Elemente Al und N in Massenprozent entsprechen einem relationalen Ausdruck Al≥0,02 %+11,57 N;
eine Heiztemperatur des Plattenrohlings während eines Warmwalzprozesses in einem Bereich von 1180 °C bis 1220 °C gesteuert wird, ein Zwischenblock eine Dicke von 40 mm bis 42 mm aufweist, eine Fertigwalztemperatur in einem Bereich von 860 °C bis 890 °C liegt und eine Haspeltemperatur in einem Bereich von 640 °C bis 670 °C liegt;
die Geschwindigkeit des Bandstahls während des kontinuierlichen Glüh- und Anlasswalzprozesses in einem Bereich von 400 m/min bis 450 m/min gesteuert wird, der Bandstahl einer Durchfeuchtungszone eine Temperatur im Bereich von 740 °C bis 760 °C aufweist; der Bandstahl einer Schnellkühlzone eine Temperatur im Bereich von 360 °C bis 380 °C aufweist, eine Abkühlungsrate in einem Bereich von 100 °C/s bis 130 °C/s liegt, der Bandstahl nach dem Abkühlen in eine Alterungszone eintritt, der Bandstahl eines ersten Abschnitts in der Alterungszone eine Temperatur im Bereich von 400 °C bis 420 °C aufweist, die Alterungszeit in einem Bereich von 60 s bis 80 s liegt, der Bandstahl eines zweiten Abschnitts in der Alterungszone eine Temperatur im Bereich von 320 °C bis 420 °C aufweist und die Alterungszeit in einem Bereich von 120 s bis 140 s liegt; und das Anlasswalzen ein zweigerüstiges Anlasswalzwerk verwendet, eine Anlasswalzkraft des ersten Anlasswalzgerüstes in einem Bereich von 4000 kN bis 4500 kN liegt, eine Anlasswalzkraft des zweiten Anlasswalzgerüstes in einem Bereich von 3000 kN bis 3500 kN liegt, der Bandstahl eine Spannung im Bereich von 40 kN bis 60 kN aufweist, und eine Dehnung des Anlasswalzens in einem Bereich von 1,4 % bis 1,6 % liegt;
wobei eine einseitige Verzinnungsmenge auf einen Bereich von 2,7 g/m² bis 2,9 g/m² während eines Verzinnungsprozesses gesteuert wird, der Bandstahl eine Geschwindigkeit im Bereich von 320 m/min bis 380 m/min aufweist, eine Erweichungsschmelztemperatur in einem Bereich von 260 °C bis 263 °C liegt und eine Höhe von einer Erweichungsschmelzvorrichtung zu einem Wasserabschreckbehälter in einem Bereich von 4,2 m bis 4,6 m liegt;
wobei die Reduktionsrate beim Kaltwalzen im Bereich von 85 % bis 88 % liegt.

2. Verfahren zur Herstellung der verzinnten Platte nach Anspruch 1, wobei das Stahlschmelzen und das Stranggießen Folgendes umfasst: Unterziehen von geschmolzenem Stahl einem Konverterschmelzen und einer RH-Läuterung, um in einen Plattenrohling gegossen zu werden.

3. Verfahren zur Herstellung der verzinnten Platte nach Anspruch 1, wobei das Warmwalzen Folgendes umfasst: Vorwalzen, Fertigwalzen, laminares Abkühlen und Aufwickeln, um eine warmgewalzte Stahlspule zu erhalten.

4. Verfahren zur Herstellung der verzinnten Platte nach Anspruch 3, wobei die warmgewalzte Stahlspule eine Dicke von 2,5 mm bis 3,0 mm aufweist.

5. Verfahren zur Herstellung der verzinnten Platte nach Anspruch 1, wobei das saure Beizen und Kaltwalzen Folgendes umfasst: Abwickeln einer warmgewalzten Stahlspule, saures Beizen, Entgraten, Kaltwalzen und Wickeln, um eine gekühlte Spule zu erhalten;
die gekühlten Spulen eine Dicke aufweisen, die während des Säurebeizens und Kaltwalzens in einem Bereich von 0,30 mm bis 0,45 mm gesteuert wird.

6. Verfahren zur Herstellung der verzinnten Platte nach Anspruch 1, wobei das kontinuierliche Glühen und Anlasswalzen Folgendes umfasst: Abwickeln einer gekühlten Spule, Entfettungsreinigung, kontinuierliches Glühen, Anlasswalzen, Besäumen und Aufwickeln, um eine geglühte Stahlspule zu erhalten.

7. Verfahren zur Herstellung der verzinnten Platte nach Anspruch 6, wobei das Anlasswalzen ein Trockenanlasswalzen ist.

8. Verfahren zur Herstellung der verzinnten Platte nach Anspruch 1, wobei das Verzinnen Folgendes umfasst: Abwickeln, Entfetten, Reinigen, Säurebeizen, Galvanisieren, Erweichungsschmelzen, Passivieren, Ölen und Wickeln einer geglühten Stahlspule, um eine verzinnte Stahlspule zu erhalten; und
das Erweichungsschmelzen ein induktives Erweichungsschmelzen ist.

9. Verzinnte Platte, erhältlich nach dem Verfahren nach einem der Ansprüche 1 bis 8, wobei die chemische Komponente des Stahls C 0,020-0,040 %, Mn 0,15-0,25 %, Si ≤0,03 %, P ≤0,015 %, S ≤0,010 %, Al 0,03~0,06 %, N ≤0,0030 %, und der Rest Fe und andere unvermeidbare Verunreinigungen, und die Gehalte der Elemente Al und N in Massenprozent erfüllen einen relationalen Ausdruck Al≥0,02 %+11,57N,
die verzinnte Platte eine Dicke von 0,30 mm bis 0,45 mm, eine Härte HR30T in einem Bereich von 58±2, eine Streckgrenze in einem Bereich von 300 MPa bis 350 MPa, eine Zugfestigkeit in einem Bereich von 3 60 MPa bis 400 MPa, eine Bruchdehnung in einem Bereich von 33 % bis 38 % und eine Streckdehnung in einem Bereich von ≤3 % aufweits, und die Mikrostruktur der verzinnten Platte aus gleichachsigen Ferrit- und Zementitteilchen besteht, wobei die Ferritkorngröße in einem Bereich von 10 bis 11 liegt und der Zementit gleichmäßig dispergiert und verteilt ist;
wobei die Verfahren für die oben genannten Parameter gemäß GB/T 2520-2017 *Kaltgewalzte verzinkte Stahlplatte und Stahlband* und GB/T 4335-2013 *Prüfverfahren für kaltgewalzte Stahlplatten mit niedrigem Kohlenstoffgehalt Ferritkorngröße* durchgeführt werden.

## Revendications

1. Procédé de fabrication d'une plaque étamée, comprenant les étapes suivantes : la fusion de l'acier et la coulée continue, le laminage à chaud, le décapage à l'acide et le laminage à froid, le recuit continu et le laminage de revenu, et l'étamage ;
dans lequel les composants chimiques d'une ébauche de plaque, lors d'un processus de fusion et de coulée continue de l'acier en pourcentage massique sont commandés pour être : C 0,020-0,040 %, Mn 0,15-0,25 %, Si ≤ 0,03 %, P ≤ 0,015 %, S ≤ 0,010 %, Al 0,03-0,06 %, N ≤ 0,0030 %, et le reste Fe et autres impuretés inévitables, et les teneurs en éléments Al et N en pourcentage massique répondent à une expression relationnelle Al ≥ 0,02 % + 11,57 N ;
une température de chauffage de l'ébauche de plaque pendant un processus de laminage à chaud est commandée dans une plage allant de 1180°C à 1220°C, une billette intermédiaire présente une épaisseur comprise entre 40 mm et 42 mm, une température de laminage de finition se situe dans une plage allant de 860°C à 890°C et une température d'enroulement se situe dans une plage allant de 640°C à 670°C ;
une vitesse de bande d'acier est commandée dans une plage allant de 400 à 450 m/min pendant le processus de recuit continu et de laminage de revenu, la bande d'acier d'une zone de trempage présente une température comprise entre 740°C et 760°C, la bande d'acier d'une zone de refroidissement rapide présente une température comprise entre 360°C et 380°C, avec une vitesse de refroidissement comprise entre 100°C/s et 130°C/s, après refroidissement la bande d'acier entre dans une zone de vieillissement, la bande d'acier d'une première section de la zone de refroidissement présente une température comprise entre 400°C et 420°C, une durée de vieillissement comprise entre 60 s et 80 s, la bande d'acier d'une seconde section de la zone de vieillissement présente une température comprise entre 320°C et 420°C, et une durée de vieillissement comprise entre 120 s et 140 s, et le laminage de revenu adopte un laminoir de revenu à deux cages, une puissance de laminage de revenu du premier laminoir de revenu est comprise entre 4000 kN et 4500 kN, la puissance de laminage de revenu du second laminoir de revenu est comprise entre 3000 kN et 3500 kN, la bande d'acier présente une tension comprise entre 40 kN et 60 kN, et un allongement de laminage de revenu est compris entre 1,4 % et 1,6 % ;
dans lequel une quantité d'étamage d'une seule face est commandée dans une plage allant de 2,7 g/m² à 2,9 g/m² au cours d'un processus d'étamage, la bande d'acier présente une vitesse comprise entre 320 m/min et 380 m/min, une température de ramollissement-fusion est comprise entre 260°C et 263°C, et une hauteur entre un dispositif de ramollissement-fusion et un réservoir de trempe à eau est comprise entre 4,2 m et 4,6 m ;
dans lequel un taux de réduction par laminage à froid se situe entre 85 % et 88 %.

2. Procédé de fabrication de la plaque étamée selon la revendication 1, dans lequel la fusion de l'acier et la coulée continue comprennent : la soumission de l'acier fondu à une fusion au convertisseur et à un raffinage RH pour être coulé en continu dans une ébauche de plaque.

3. Procédé de fabrication de la plaque étamée selon la revendication 1, dans lequel le laminage à chaud comprend : le laminage grossier, le laminage de finition, le refroidissement laminaire et l'enroulement pour obtenir une bobine d'acier laminée à chaud.

4. Procédé de fabrication de la plaque étamée selon la revendication 3, dans lequel la bobine d'acier laminée à chaud présente une épaisseur comprise entre 2,5 mm et 3,0 mm.

5. Procédé de fabrication de la plaque étamée selon la revendication 1, dans lequel le décapage à l'acide et le laminage à froid comprennent : la soumission d'une bobine d'acier laminée à chaud au déroulement, au décapage à l'acide, à l'ébavurage, au laminage à froid et à l'enroulement pour obtenir une bobine refroidie ;
la bobine refroidie présente une épaisseur commandée dans une plage allant de 0,30 mm à 0,45 mm pendant le processus de décapage à l'acide et de laminage à froid.

6. Procédé de fabrication de la plaque étamée selon la revendication 1, dans lequel le recuit continu et le laminage de revenu comprennent : la soumission d'une bobine refroidie au déroulement, au dégraissage, au nettoyage, au recuit continu, au laminage de revenu, à l'ébavurage et à l'enroulement pour obtenir une bobine d'acier recuit.

7. Procédé de fabrication de la plaque étamée selon la revendication 6, dans lequel le laminage de revenu est un laminage de revenu à sec.

8. Procédé de fabrication de la plaque étamée selon la revendication 1, dans lequel l'étamage comprend : la soumission d'une bobine d'acier recuit au déroulement, au dégraissage, au nettoyage, au décapage à l'acide, à l'électroplacage, au ramollissement-fusion, à la passivation, à l'huilage et à l'enroulement pour obtenir une bobine d'acier étamée ; et
le ramollissement-fusion est un ramollissement-fusion par induction.

9. Plaque étamée, pouvant être obtenue par le procédé selon l'une quelconque des revendications 1 à 8, dans laquelle la composition chimique de l'acier est : C 0,020-0,040 %, Mn 0,15-0,25 %, Si ≤ 0,03 %, P ≤ 0,015 %, S ≤ 0,010 %, Al 0,03~0,06 %, N ≤ 0,0030 %, le reste étant Fe et d'autres impuretés inévitables, et les teneurs en éléments Al et N en pourcentage massique répondent à une expression relationnelle Al ≥ 0,02 % + 11,57N,
la plaque étamée présente une épaisseur comprise entre 0,30 mm et 0,45 mm, une dureté HR30T comprise entre 58±2, une limite d'élasticité comprise entre 300 MPa et 350 MPa, une résistance à la traction comprise entre 360 MPa et 400 MPa, un allongement à la rupture compris entre 33 % et 38 %, et un allongement à la limite d'élasticité compris entre ≤ 3 %, et une microstructure de la plaque étamée est composée de particules équiaxes de ferrite et de cémentite, dans laquelle une taille de grains de ferrite est comprise entre niveau 10 et niveau 11, et la cémentite est uniformément dispersée et distribuée ;
dans laquelle les procédés d'essai pour les paramètres ci-dessus sont réalisés selon les normes GB/T 2520-2017 *Plaque et bande d'acier étamée laminée à froid* et GB/T 4335-2013 *Procédé d'essai pour la taille de grain de ferrite des plaques d'acier à faible teneur en carbone laminées à froid.*
